(19) Europäisches Patentamt
European Patent Office
Office européen des brevets

(11) **EP 3 185 986 B1**

(12) **EUROPEAN PATENT SPECIFICATION**

(45) Date of publication and mention
of the grant of the patent:
**10.03.2021   Bulletin 2021/10**

(21) Application number: **14766279.5**

(22) Date of filing: **27.08.2014**

(51) Int Cl.:
**B01D 53/04** *(2006.01)*     **B60T 17/00** *(2006.01)*

(86) International application number:
**PCT/US2014/052817**

(87) International publication number:
**WO 2016/032449 (03.03.2016 Gazette 2016/09)**

(54) **IMPROVED CONTROL OF AN AIR DRYER REGENERATION CYCLE**

VERBESSERTE STEUERUNG DES REGENERATIONSZYKLUS EINES LUFTTROCKNERS

AMÉLIORATION DE LA COMMANDE D'UN CYCLE DE RÉGÉNÉRATION DE DESSICCATEUR D'AIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.07.2017   Bulletin 2017/27**

(73) Proprietor: **New York Air Brake LLC
Watertown, NY 13601 (US)**

(72) Inventors:
• **WRIGHT, Eric C.
Evans Mills, NY 13637 (US)**
• **KOHAR, Richard
Kingston, ON K7M5AB (CA)**

(74) Representative: **Strehl Schübel-Hopf & Partner
Maximilianstrasse 54
80538 München (DE)**

(56) References cited:
**EP-A1- 0 375 220      EP-A1- 2 123 343
WO-A1-02/096732      US-A- 4 816 043**

EP 3 185 986 B1

**Description**

BACKGROUND OF THE INVENTION

1. FIELD OF THE INVENTION

The present invention relates to desiccant air dryers and, more particularly to a system and method for controlling the regeneration cycle of a twin tower desiccant air dryer.

2. DESCRIPTION OF THE RELATED ART

Air dryers for railway use are typically a "pressure-swing absorption" type, also referred to as a twin-tower, desiccant air dryer. The basic control scheme for switching between the two columns of desiccant is a fixed timer enabled by a "compressor ON" signal from the compressor controls. Whenever the compressor is running, the air dryer cycles between two columns of desiccant at a fixed time cycle to direct wet product air through one column to remove the water vapor, thus resulting in dry product air, while simultaneously taking a fraction of the dry product air and counter-flowing it through the other previously saturated column of desiccant to remove accumulated moisture. Although simple and robust, this control scheme is inefficient and wastes considerable energy.

A typical AAR locomotive air supply system consists of a compressor and two main reservoirs in series, MR1 and MR2. The air dryer is usually installed between MR1 and MR2, so that dry air is delivered to MR2. MR2 is used as an exclusive air source for the train braking system and is protected by a back-flow check valve between MR1 and MR2. The air in MR1 is used for other locomotive air consumers like the windshield wipers, horn, sanders, etc. When the air is consumed from either MR1 or MR2, the compressor will operate to recharge the system. If the air pressure in MR1 is less than MR2, the compressor will operate so that air flows into MR1 to recharge it, but air will not flow into MR2 until the pressure in MR1 is greater than the pressure in MR2. In this situation, the air dryer regeneration cycle is enabled by a compressor 'on' signal. Because there is no air flow between MR1 and MR2, however, there is no air flow through the air dryer. As a result, the dry product purge air consumed by the air dryer regeneration cycle is wasted.

The second inherent inefficiency of the existing fixed timer regeneration control scheme is that it assumes that the water content of the incoming "wet" air is constant, and the fixed timing cycle is based on the worst case for maximum flow and maximum wet air. The amount of water vapor in air is directly proportional to the saturation water vapor partial pressure, which has a highly non-linear, exponential-like, relation with temperature. For example, the saturation water vapor partial pressure at -17.78 C (0 °F) is 0.00128 bar (0.01857 psia); at 21.11 C (70 °F) it is 0.025 bar (0.3633 psia); at 51.67 °C (125°F) it is 0.134 bar (1.9447 psia), and at 65.56 °C (150°F) it is 0.2566 bar (3.7228 psia). By contrast, air at 51.67 °C (125°F) can contain 5.35 times as much water vapor as air at 21.11 °C (70°F), and air at 65.56 (150°F) can contain 10.2 times as much water vapor as air at 21.11 °C (70°F). Thus, air at 51.67 °C (125°F) can contain 105 times as much water vapor as air at -17.78 °C (0°F), and air at 65.56 °C (150°F) can contain 200 times as much water vapor as air at -17.78 °C (0°F).

Thus, it is clear that an air dryer fixed cycle time regeneration cycle which is established on the water holding capacity of the desiccant bed and the water content of saturated air at the maximum inlet air temperature, e.g., 65.56 °C (150°F) will cycle much more frequently than is necessary for lower temperatures and thus will waste dry product purge air. For example, a system designed to handle 65.56 °C (150°F) saturated air, will be cycling 10.2 times too much at 21.11 °C (70°F) and 200 times too much at -17.78 °C (0°F). Thus, at 21.11 °C (70°F), there is an opportunity to save approximately (17% - 17%/10.2) = 15% product air and compressor energy this is being wasted.

EP 0 375 220 A1 discloses a controller and a control method for sorption bed drying which involves the calculation of adsorption intervals and cycles based on temperature data measured at the inlet to the conduit.

BRIEF SUMMARY OF THE INVENTION

The present invention is defined in the independent claims, Further advantageous features are set out in the dependent claims.

The present invention comprises a control system for an air dryer that switches the flow and counter flow of air through each of two desiccant towers in response to a regeneration cycle signal. Where the drying cycle time is the time that air flows through the active desiccant tower, and the regeneration cycle time is the time duration that purge air counter-flows through the saturated desiccant tower, the system may include a drying cycle time that is variable depending on temperature while the regeneration cycle remains constant period of fixed duration that is optimized to regenerated the desiccant bed with a minimum purge air usage.

The system includes a sensor positioned in an inlet to an air dryer to output a signal corresponding to the temperature of an air stream in the inlet. The system also includes a controller interconnected to the temperature sensor that is programmed to calculate a drying cycle time that is proportional to the saturation partial pressure of water vapor in the inlet air stream based on the signal corresponding to the temperature of the stream of air in the inlet of the air dryer and to output a regeneration cycle signal according to the drying cycle time that causes the dryer to switch the active flow through the regenerated, dry desiccant tower and to initiate the regeneration cycle for the saturated tower with the counter flow of dry air through the saturated desiccant towers.

For example, the controller may be programmed to calculate the drying cycle time based upon a maximum cycle time that is adjusted based on the maximum actual inlet air temperature. The drying cycle T(dry) may be calculated based on a maximum cycle time $T(dry)_{max\ cycle}$ and adjusted by the maximum actual inlet air temperature according to the formula:

$$T(dry) = T(dry)_{max\ cycle} \times [\text{Saturation Partial Pressure at maximum actual inlet air temperature}] / [\text{Saturation Partial Pressure at maximum inlet air temperature}]$$

The system further includes a proximity sensor positioned in a back flow check valve positioned in fluid communication between a first main reservoir and a second main reservoir that are connected in series. The proximity sensor may be configured to output a binary signal representing the position of the back flow check valve. In this embodiment, the controller is programmed to only send the regeneration cycle signal if the position sensor has output a signal indicating the back flow check valve is open. In addition, the controller may additionally be programmed to estimate the volumetric air flow through the air dryer based on whether the back flow check valve is open or closed.

The proximity sensor may also be configured to output a proportional signal representing the position of the back flow check valve. In this embodiment, the controller is programmed to calculate the volumetric air flow through the air dryer. The controller can further adjusts the drying cycle time based on the calculated volumetric air flow.

The control method of the present invention comprises measuring the temperature of an air stream in an inlet to the air dryer, calculating a drying cycle time that is proportional to the saturation partial pressure of water vapor in the inlet air stream based on the temperature of the air stream in the inlet to the air dryer, and switching the flow and counter flow of air through each of two desiccant towers according to the drying cycle time. The method may further include calculating a drying cycle time comprises adjusting a maximum cycle time based on the maximum actual inlet air temperature, where adjusting a maximum cycle time $T(dry)_{max\ cycle}$ based on the maximum actual inlet air temperature to determine a regeneration cycle time T(dry) is performed according to the formula:

$$T(dry) = T(dry)_{max\ cycle} \times [\text{Saturation Partial Pressure at maximum actual inlet air temperature}] / [\text{Saturation Partial Pressure at maximum inlet air temperature}]$$

The method further comprises the step of determining the position of a back flow check valve positioned in fluid communication between a first main reservoir and a second main reservoir connected in series and switching the flow and counter flow of air through each of two desiccant towers only occurs if the back flow check valve is open. If the valve is only determined to be opened or closed, the volumetric air flow through the air dryer may be estimated based on whether the back flow check valve is open or closed. If the actual position of the valve is determined, the volumetric air flow through the air dryer may be calculated. The drying cycle time may then be adjusted based on the estimated or the calculated volumetric air flow.

BRIEF DESCRIPTION OF THE SEVERAL VIEWS OF THE DRAWING(S)

The present invention will be more fully understood and appreciated by reading the following Detailed Description in conjunction with the accompanying drawings, in which:

Fig. 1 is a schematic of a locomotive air supply system that includes a twin-tower, desiccant air dryer in which the control system of the present invention may be used;
Fig. 2 is a schematic of a control system for a twin-tower, desiccant air dryer according to the present invention;
Fig. 3 is a graph water vapor partial pressure verses ambient temperature for use in programming the control system of the present invention;
Fig. 4 is a schematic of a first back flow check valve having a position sensor according to the present invention;
Fig. 5 is a schematic of a second back flow check valve having a position sensor according to the present invention;
Fig. 6 is a schematic of a third back flow check valve having a position sensor according to the present invention.

DETAILED DESCRIPTION OF THE INVENTION

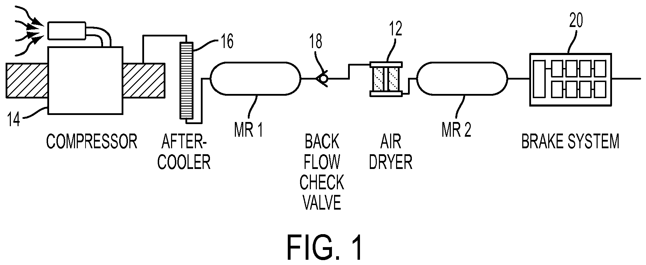

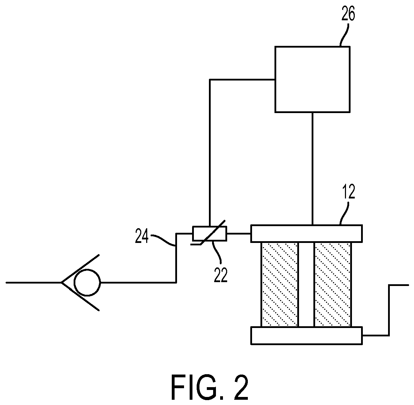

Referring now to the drawings, wherein like reference numerals refer to like parts throughout, there is seen in Fig. 2 a control system 10 for a twin-tower, desiccant air dryer 12 used in connection with a locomotive air supply system, such as that seen in Fig. 1. For example, the locomotive air supply system includes an air compressor 14 that provides compressed air via an aftercooler 16 to first main reservoir MR1. Pressurized air then flows from MR1 through a back flow check valve 18 to air dryer 12. Dried air is then provided from air dryer 12 to a second main reservoir MR2 for using by the locomotive brake system 20. In control system 10, the drying time cycle of the air dryer 12 is variable and proportional to the inlet air temperature only, or to the inlet air temperature and the inlet air flow. System 10 may be provided as part of air dryer 12 by including the necessary electronics and related components as discussed below for controlling the regeneration cycle.

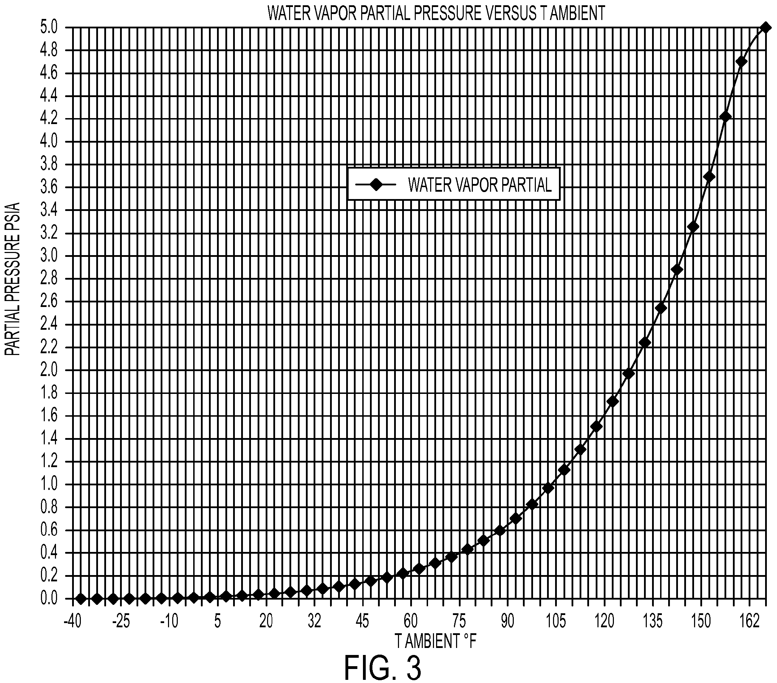

Control system 10 includes a temperature sensing device 22, such as a thermistor or thermocouple, preferably located in the inlet air stream 24 to an air dryer 12. A controller 26 is programmed to use the inlet air temperature as determined by temperature sensing device 22 to adjust the drying cycle time T(dry) or air dryer 12 to be proportional to the saturation partial pressure of water vapor in air. The relationship between water vapor partial pressure and ambient temperature is illustrated in Fig. 3 and may thus be used by system 10 to adjust the drying cycle time T(dry) of air dryer 12 so that it is proportional to the saturation partial pressure of water vapor in air.

First, a maximum cycle time ($T_{max\ cycle}$) is determined based on the maximum expected flow rate through the air dryer with saturated air at the maximum expected inlet air temperature at the lower pressure governor setting of the compressor. System 10 then adjusts the actual drying cycle time T(dry) according to the following relationship:

$$T(dry) = T(dry)_{max\ cycle} \text{ X [Saturation Partial Pressure at maximum actual inlet air temperature] / [Saturation Partial Pressure at maximum inlet air temperature].}$$

In this way, the drying cycle time T(dry) is made proportional to the water holding capacity of the inlet air. It should be noted that the inlet air to the air dryer is almost always at saturation as a result of the compression of the atmospheric air from 1 bar (14.7 psia), to the main reservoir pressure, which is 9 to 10 bar (147.0 psia).

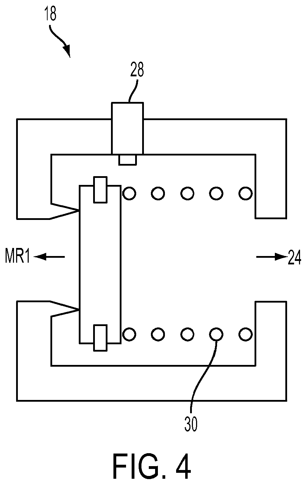

Referring to Fig. 4, system 10 includes a proximity sensor 28 positioned in back flow check valve 18 installed between MR1 and MR2 to provide a simple, robust measurement of air flow into the air dryer. Check valve 18 opens when MR1 pressure exceeds the pressure in MR2; otherwise, check valve 18 is held closed by a bias spring 30. Proximity sensor 28 is positioned to sense whether check valve 18 is open or closed.

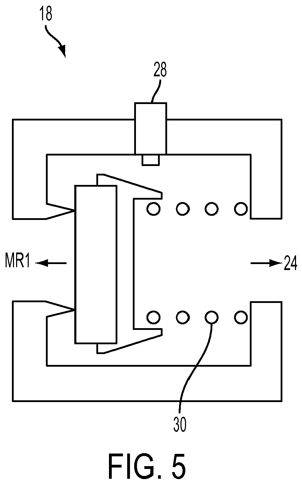

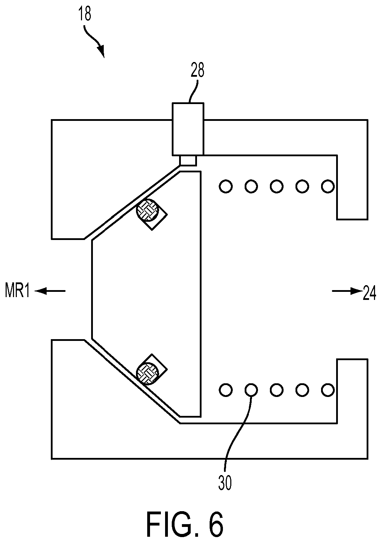

Check valve 18 may be arranged so that proximity sensor 28 provides either a binary signal when check valve 18 is open or closed, or an analog signal proportional to the displacement of the movable check valve component against the bias spring. For example, Fig. 4 shows a binary sensing arrangement and Figs. 5 and 6 illustrate proportional sensing arrangements. The signal from proximity sensor 28 is used by the regeneration electronics, such as controller 26, to enable the regeneration cycle only when there is flow through air dryer 12, as determined by the open or closed or displacement state of back flow check valve 18. This simple flow determination arrangement is a significant improvement over the prior art practice of enabling the regeneration cycle based strictly on compressor power 'on' status.

If proximity sensor 28 is arranged to provide a an signal that is proportional to the amount of opening of back flow check valve 18, then system 10 can adjust the drying cycle based on the calculated volumetric air flow through the air dryer. The size of the opening of back flow check valve 18 is proportional to the pressure difference across back flow check valve 18 ($P_{MR1}$ - $P_{MR2}$) and the spring rate and preload of bias spring 30 in check valve 18. By measuring the check valve displacement, and knowing the check valve characteristics and valve geometry and spring rate, it is possible to calculate the pressure drop across the check valve ($P_{MR1}$ - $P_{MR2}$) and to calculate the instantaneous flow rate across the check valve. The total air flow volume can then be calculated by a simple integration of the instantaneous air flow rate over time

Preferably, the drying cycle is controlled using both the inlet air temperature correction for saturation partial pressure and the calculated air flow volume. When a check valve 18 having binary sensing is installed between MR1 and MR2, a pressure transducer in MR2 has a variable output, and a binary compressor function on/off signal is available, system 10 may adjust T(dry) according to air flow from MR1 to MR2. If MR1 and MR2 are at the same pressure and no flow is exiting MR2, when the compressor start operating it will simultaneously charge MR1 and MR2, with all flow going into MR1 and then 1/2 flow going into MR2 (note that MR1 and MR2 are typically the same size). Furthermore, if check valve 18 is open, the compressor is on, and the pressure in MR2 does not increase, then it can be inferred that all of the compressor flow is going through MR2 (and through the air dryer). If check valve 18 is open, the compressor is on, and the pressure in MR2 is increasing at less than the maximum rate, then it can be inferred that the flow rate into MR2 is the sum of the flow resulting in the pressure increase plus the outflow. The amount of the flow into MR2 through the air dryer can be estimated.

To recognize these minimum and maximum conditions the following control variables are used:

$rateP_{MR2\ MAX}$ = maximum rate of change of $P_{MR2}$ (the maximum rate of change of $P_{MR2}$ occurs when the compressor is on, back flow check valve 18 is open, and there is no outflow from MR2)

$rateP_{MR2}$ = actual rate of change of $P_{MR2}$

The following control algorithm is used to correct T(dry) for flow using the rate of MR2 pressure change versus time and when the Back Flow check valve is open and the compressor is on:

$$\text{flow corrected T(dry)} = \text{T(dry}_{max\ cycle}) \times \{1 - rateP_{MR2} / [2 \times rateP_{MR2\ MAX}]\}$$

In this way, the minimum flow rate occurs when rate $P_{MR2} = P_{MR2\ MAX}$ and the dry time T(dry) = ½T(dry$_{max\ cycle}$). The maximum flow rate occurs when $P_{MR2}=0$ with the compressor on and the check valve open. In this state, the T(dry) =T(dry$_{max\ cycle}$). The T(dry) is likewise adjusted proportionally for rates of change of the pressure in MR2 between these limits: $0 < P_{MR2} < rateP_{MR2\ MAX}$. Lastly, the drying time, T(dry), can be corrected for both temperature and flow as follows:

$$\text{T(dry)} = \text{T(dry}_{max\ cycle}) \times [\text{Saturation Partial Pressure at actual inlet air}$$

$$\text{temperature}] / [\text{Saturation Partial Pressure at maximum inlet air temperature}] \times$$

$$\{1 - rateP_{MR2} / [2 \times rateP_{MR2\ MAX}]\}$$

System 10 may thus implement a drying cycle time that is variable depending on temperature while the regeneration cycle remains constant period of fixed duration that is optimized to regenerated the desiccant bed with a minimum purge air usage. Conventional regeneration control occurs as set forth in Table 1 below, with the time of each stage provided as an example:

Table 1

| Cycle Stage | 1 | 2 | 3 | 4 |
|---|---|---|---|---|
| **A Tower** | Drying | Drying | Regenerating | Repressurizing |
| **B Tower** | Regenerating | Repres surizing | Drying | Drying |
| **Time in Stage** | 50 Seconds | 20 seconds | 50 seconds | 20 seconds |

A regeneration signal, which results in a switch in the cycle progression for each of the A and B towers, is sent at the end of Stage 2 to switch operations between Tower A and Tower B, and then again at the end of Stage 4 to return to the configuration of Stage 1.

According to the present invention, a variable drying cycle time may be implemented as illustrated in Table 2 below, with the time of each stage provided as an example:

Table 2

| Cycle Stage | 1 | 2a | 2b | 3 | 4a | 4b |
|---|---|---|---|---|---|---|
| **A Tower** | Drying | | | Regenerating | Repressurizing | Holding |
| **Time in Stage** | Time *f*(temp, flow) | | | 50 seconds | 20 seconds | Remainder |
| **B Tower** | Regenerating | Repressurizing | Holding | Drying | | |
| **Time in Stage** | 50 seconds | 20 seconds | Remainder | Time *f*(temp, flow) | | |

In Table 2, the regeneration signal is sent after each tower has concluded its variable length drying cycle, e.g., after Stage 2b and again after Stage 4b, with the non-drying tower being maintained into a holding cycle while the drying tower concludes its variable length drying cycle.

It should be recognized that control system 10 could be implemented in independent circuits, a programmable microcontroller or microprocessor, programmed firmware, analog circuitry, digital circuitry, or combinations thereof, either as an addition to the electronics associated with air dryer 12 or as a separate package that interfaces with air dryer 12.

The control system for an air dryer that switches the flow and counter flow of air through each of two desiccant towers in response to a regeneration cycle signal comprises a sensor positioned in an inlet to an air dryer to output a signal corresponding to the temperature of an air stream in the inlet and a controller interconnected to the temperature sensor that is programmed to calculate a drying cycle time that is proportional to the saturation partial pressure of water vapor in the inlet air stream based on the signal corresponding to the temperature of the stream of air in the inlet of the air dryer and to output a regeneration cycle signal according to the drying cycle time that causes the flow and counter flow of air through each of two desiccant towers to switch. The controller is programmed to calculate the drying cycle time based upon a maximum cycle time that is adjusted based on the maximum actual inlet air temperature. The drying cycle T(dry) is calculated based on a maximum cycle time $T(dry)_{max\ cycle}$ and adjusted by the maximum actual inlet air temperature according to the formula:

$$T(dry) = T(dry)_{max\ cycle}\ x\ [\text{saturation partial pressure at maximum actual inlet air temperature}] / [\text{saturation partial pressure at maximum inlet air temperature}]$$

The system further comprises a proximity sensor positioned in a back flow check valve positioned in fluid communication between a first main reservoir and a second main reservoir that are connected in series. The system further comprises a proximity sensor that is configured to output a binary signal representing the position of the back flow check valve. The controller is programmed to only send the regeneration cycle signal if the position sensor has output a signal indicating the back flow check valve is open. The controller is further programmed to estimate the volumetric air flow through the air dryer based on whether the back flow check valve is open or closed. The proximity sensor is configured to output a proportional signal representing the position of the back flow check valve. The controller is further programmed to calculate the volumetric air flow through the air dryer. The controller further adjusts the regeneration cycle time based on the calculated volumetric air flow.

The method of controlling the regeneration cycle of an air dryer that switches the flow and counter flow of air through each of two desiccant towers, comprises the steps of measuring the temperature of an air stream in an inlet to the air dryer, calculating a drying cycle time that is proportional to the saturation partial pressure of water vapor in the inlet air stream based on the temperature of the air stream in the inlet to the air dryer, and switching the flow and counter flow of air through each of two desiccant towers according to the drying cycle time. The step of calculating a drying cycle time comprises adjusting a maximum cycle time based on the maximum actual inlet air temperature. The step of adjusting a maximum cycle time $T(dry)_{max\ cycle}$ based on the maximum actual inlet air temperature to determine a regeneration cycle time T(dry) is performed according to the formula:

$$T(dry) = T(dry)_{max\ cycle}\ x\ [\text{saturation partial pressure at maximum actual inlet air temperature}] / [\text{saturation partial pressure at maximum inlet air temperature}]$$

The method further comprises the step of determining the position of a back flow check valve positioned in fluid communication between a first main reservoir and a second main reservoir connected in series. The position of the back flow check valve is determined to be either open or closed. The step of switching the flow and counter flow of air through each of two desiccant towers according to the drying cycle time only occurs if the back flow check valve is open. The method further comprises the step of estimating the volumetric air flow through the air dryer based on whether the back flow check valve is open or closed. The amount of displacement of the back flow check valve is determined. The method further comprises the step of calculating the volumetric air flow through the air dryer based on the amount of displacement of the check valve. The method further comprises the step of adjusting the drying cycle time based on the calculated volumetric air flow.

**Claims**

1. A control system (10) for an air dryer (12) that switches the flow and counter flow of air through each of two desiccant towers in response to a regeneration cycle signal, comprising:

a temperature sensor (22) adapted to be positioned in an inlet to the air dryer to output a signal corresponding to the temperature of an air stream in the inlet;

a controller (26) interconnected to the temperature sensor that is programmed to calculate a drying cycle time that is proportional to the saturation partial pressure of water vapor in the inlet air stream based on the signal corresponding to the temperature of the stream of air in the inlet of the air dryer and to output a regeneration cycle signal according to the drying cycle time that causes the flow and counter flow of air through each of two desiccant towers to switch, **characterized in that** it further comprises a proximity sensor (28) adapted to be positioned in a back flow check valve (18) positioned in fluid communication between a first main reservoir (MR1) and a second main reservoir (MR2) that are connected in series.

2. The system of claim 1,
   wherein the controller (26) is programmed to calculate the drying cycle time based upon a maximum cycle time that is adjusted based on the maximum actual inlet air temperature.

3. The system of claim 2,
   wherein the drying cycle T(dry) is calculated based on a maximum cycle time $T(dry)_{max\ cycle}$ and adjusted by the maximum actual inlet air temperature according to the formula:

$$T(dry) = T(dry)_{max\ cycle} \times [\text{saturation partial pressure at maximum actual inlet air}$$

$$\text{temperature}] / [\text{saturation partial pressure at maximum inlet air temperature}].$$

4. The system of claim 3,
   wherein the proximity sensor (28) is configured to output a binary signal representing the position of the back flow check valve (18) and the controller (26) is programmed to only send the regeneration cycle signal if the proximity sensor has output a signal indicating the back flow check valve is open.

5. The system of claim 4,
   wherein the controller (26) is further programmed to estimate the volumetric air flow through the air dryer (12).

6. The system of claim 1,
   wherein the proximity sensor (28) is configured to output a proportional signal representing the position of the back flow check valve (18) and the controller (26) is further programmed to calculate the volumetric air flow through the air dryer (12).

7. The system of claim 6,
   wherein the controller (26) is further programmed to adjust the regeneration cycle time based on the calculated volumetric air flow.

8. A method of controlling the regeneration cycle of an air dryer (12) that switches the flow and counter flow of air through each of two desiccant towers, comprising the steps of:

   measuring the temperature of an air stream in an inlet to the air dryer;
   determining the position of a back flow check valve (18) positioned in fluid communication between a first main reservoir (MR1) and a second main reservoir (MR2) connected in series;
   calculating a drying cycle time that is proportional to the saturation partial pressure of water vapor in the inlet air stream based on the temperature of the air stream in the inlet to the air dryer; and
   switching the flow and counter flow of air through each of two desiccant towers according to the drying cycle time only if the back flow check valve is open.

9. The method of claim 8,
   wherein the step of calculating a drying cycle time comprises adjusting a maximum cycle time based on the maximum actual inlet air temperature.

10. The method of claim 9,
    wherein the step of adjusting a maximum cycle time $T(dry)_{max\ cycle}$ based on the maximum actual inlet air temperature to determine a regeneration cycle time T(dry) is performed according to the formula:

$$T(dry) = T(dry)_{max\ cycle} \times [\text{saturation partial pressure at maximum actual inlet air}$$

$$\text{temperature}] / [\text{saturation partial pressure at maximum inlet air temperature}].$$

**11.** The method of claim 8, further comprising the step of estimating the volumetric air flow through the air dryer (12).

**Patentansprüche**

**1.** Steuersystem (10) für einen Lufttrockner (12), das die Strömung und Gegenströmung von Luft durch jeden von zwei Trocknungstürmen auf ein Regerationszyklussignal hin schaltet, umfassend:

einen Temperatursensor (22), der dazu ausgelegt ist, an einem Einlass zum Lufttrockner positioniert zu werden, um ein Signal auszugeben, das der Temperatur einer Luftströmung im Einlass entspricht;
eine Steuerung (26), die mit dem Temperatursensor verbunden ist und dazu programmiert ist, eine Trockenzykluszeit, die proportional zum partiellen Sättigungsdruck von Wasserdampf in der Einlass-Luftströmung ist, auf der Grundlage des der Temperatur der Luftströmung im Einlass des Lufttrockners entsprechenden Signals zu berechnen und ein Regenerationszyklussignal gemäß der Trockenzykluszeit auszugeben, das das Schalten der Strömung und Gegenströmung von Luft durch jeden von zwei Trocknungstürmen auslöst, **gekennzeichnet dadurch, dass** es ferner einen Nähesensor (28) umfasst, der dazu ausgelegt ist, in einem Rückströmungskontrollventil (18) positioniert zu sein, dass in Strömungskommunikation zwischen einem ersten Hauptreservoir (MR1) und einem zweiten Hauptreservoir (MR2), die in Reihe verbunden sind, positioniert ist.

**2.** System nach Anspruch 1,
wobei die Steuerung (26) dazu programmiert ist, die Trockenzykluszeit auf der Grundlage einer Maximalzykluszeit zu berechnen, die auf der Grundlage der maximalen aktuellen Einlasslufttemperatur justiert wird.

**3.** System nach Anspruch 2,
wobei die Trockenzykluszeit T(trocken) auf der Grundlage einer Maximalzykluszeit T(trocken)$_{maxz\ Zyklus}$ berechnet wird und durch die maximale aktuelle Einlasslufttemperatur gemäß der folgenden Formel justiert wird:

$$T(trocken)=T(trocken)_{max\ Zyklus} \bullet [\text{partieller Sättigungsdruck bei maximaler}$$

$$\text{aktueller Einlasslufttemperatur}]/[\text{partieller Sättigungsdruck bei maximaler}$$

$$\text{Einlasslufttemperatur}].$$

**4.** System nach Anspruch 3,
wobei der Nähesensor (28) dazu eingerichtet ist, ein binäres Signal auszugeben, das die Position des Rückströmungskontrollventils (18) wiedergibt, und die Steuerung (26) dazu programmiert ist, das Regenerationszyklussignal nur abzusenden, falls der Nähesensor ein Signal ausgegeben hat, das anzeigt, dass das Rückströmungskontrollventil offen ist.

**5.** System nach Anspruch 4,
wobei die Steuerung (26) ferner dazu programmiert ist, die volumetrische Luftströmung durch den Lufttrockner (12) zu schätzen.

**6.** System nach Anspruch 1,
wobei der Nähesensor (28) dazu eingerichtet ist, ein proportionales Signal auszugeben, das die Position des Rückströmungskontrollventils (18) wiedergibt, und die Steuerung (26) ferner dazu programmiert ist, die volumetrische Luftströmung durch den Lufttrockner (12) zu berechnen.

**7.** System nach Anspruch 6,
wobei die Steuerung (26) ferner dazu programmiert ist, die Regenerationszykluszeit auf der Grundlage der berechneten volumetrischen Luftströmung zu justieren.

**8.** Verfahren zum Steuern des Regenerationszyklus eines Lufttrockners (12), das die Strömung und Gegenströmung von Luft durch jeden von zwei Trocknungstürmen schaltet, umfassend die folgenden Schritte:

Messen der Temperatur einer Luftströmung in einem Einlass zum Lufttrockner;
Bestimmen der Position eines Rückströmungskontrollventils (18), das in Strömungskommunikation zwischen einem ersten Hauptreservoir (MR1) und einem zweiten Hauptreservoir (MR2), die in Reihe verbunden sind, positioniert ist;
Berechnen einer Trockenzykluszeit, die proportional zum partiellen Sättigungsdruck von Wasserdampf in der Einlassluftströmung ist, auf der Grundlage der Temperatur der Luftströmung im Einlass zum Lufttrockner und Schalten der Strömung und Gegenströmung von Luft durch jeden von zwei Trocknungstürmen gemäß der Trockenzykluszeit nur, falls das Rückströmungskontrollventil offen ist.

9. Verfahren nach Anspruch 8,
wobei das Berechnen einer Trockenzykluszeit das Justieren einer Maximalzykluszeit auf der Grundlage der maximalen aktuellen Einlasslufttemperatur beinhaltet.

10. Verfahren nach Anspruch 9,
wobei das Justieren einer Maximalzykluszeit T(trocken)$_{\text{max Zyklus}}$ auf der Grundlage der maximalen aktuellen Einlasslufttemperatur zum Bestimmen einer Regenerationszykluszeit T(trocken) gemäß der folgenden Formel ausgeführt wird:

$$T(\text{trocken}) = T(\text{trocken})_{\text{max Zyklus}} \bullet [\text{partieller Sättigungsdruck bei maximaler aktueller Einlasslufttemperatur}]/[\text{partieller Sättigungsdruck bei maximaler Einlasslufttemperatur}].$$

11. Verfahren nach Anspruch 8, ferner umfassend, einen Schritt, bei dem die volumetrische Luftströmung durch den Lufttrockner (12) geschätzt wird.

## Revendications

1. Système de commande (10) pour un dessiccateur d'air (12) qui commute le flux d'air et le flux d'air à contre-courant à travers chacune de deux tours de dessiccation en réponse à un signal de cycle de régénération, comprenant :

un capteur de température (22) adapté pour être positionné dans une entrée du dessiccateur d'air pour délivrer un signal correspondant à la température d'un courant d'air dans l'entrée ;
un contrôleur (26) interconnecté au capteur de température qui est programmé pour calculer un temps de cycle de séchage qui est proportionnel à la pression partielle de saturation de la vapeur d'eau dans le courant d'air d'entrée sur la base du signal correspondant à la température du courant d'air dans l'entrée du dessiccateur d'air et pour délivrer un signal de cycle de régénération en fonction du temps de cycle de séchage qui provoque la commutation du flux d'air et du flux d'air à contre-courant à travers chacune des deux tours de dessiccation, **caractérisé en ce qu'**il comprend en outre un capteur de proximité (28) adapté pour être positionné dans un clapet anti-retour (18) positionné en communication fluidique entre un premier réservoir principal (MR1) et un second réservoir principal (MR2) qui sont reliés en série.

2. Système selon la revendication 1,
dans lequel le contrôleur (26) est programmé pour calculer le temps de cycle de séchage sur la base d'un temps de cycle maximum qui est ajusté sur la base de la température maximale réelle de l'air d'admission.

3. Système selon la revendication 2,
dans lequel le cycle de séchage T(séch) est calculé sur la base d'un temps de cycle maximum T(séch)$_{\text{cycle max}}$ et ajusté par la température maximale réelle de l'air d'admission selon la formule :

$$T(séch) = T(séch)_{cycle\ max} \times [\text{pression partielle de saturation à la température maximale réelle de l'air d'admission}] / [\text{pression partielle de saturation à la température maximale de l'air d'admission}].$$

**4.** Système selon la revendication 3,
dans lequel le capteur de proximité (28) est conçu pour délivrer un signal binaire représentant la position du clapet anti-retour (18) et le contrôleur (26) est programmé pour envoyer le signal de cycle de régénération uniquement si le capteur de proximité a délivré un signal indiquant que le clapet anti-retour est ouvert.

**5.** Système selon la revendication 4,
dans lequel le contrôleur (26) est en outre programmé pour estimer le débit d'air volumétrique à travers le dessiccateur d'air (12).

**6.** Système selon la revendication 1,
dans lequel le capteur de proximité (28) est conçu pour délivrer un signal proportionnel représentant la position du clapet anti-retour (18) et le contrôleur (26) est en outre programmé pour calculer le débit d'air volumétrique à travers le dessiccateur d'air (12).

**7.** Système selon la revendication 6,
dans lequel le contrôleur (26) est en outre programmé pour ajuster le temps de cycle de régénération sur la base du débit d'air volumétrique calculé.

**8.** Procédé de commande du cycle de régénération d'un dessiccateur d'air (12) qui commute le flux d'air et le flux d'air à contre-courant à travers chacune de deux tours de dessiccation, comprenant les étapes de :

mesure de la température d'un courant d'air dans une entrée du dessiccateur d'air ;
détermination de la position d'un clapet anti-retour (18) positionné en communication fluidique entre un premier réservoir principal (MR1) et un second réservoir principal (MR2) reliés en série ;
calcul d'un temps de cycle de séchage qui est proportionnel à la pression partielle de saturation de la vapeur d'eau dans le courant d'air d'admission sur la base de la température du courant d'air dans l'entrée du dessiccateur d'air ; et
commutation du flux d'air et du flux d'air à contre-courant à travers chacune de deux tours de dessiccation en fonction du temps de cycle de séchage uniquement si le clapet anti-retour est ouvert.

**9.** Procédé selon la revendication 8,
dans lequel l'étape de calcul d'un temps de cycle de séchage comprend l'ajustement d'un temps de cycle maximum sur la base de la température maximale réelle de l'air d'admission.

**10.** Procédé selon la revendication 9,
dans lequel l'étape d'ajustement d'un temps de cycle maximum $T(séch)_{cycle\ max}$ sur la base de la température maximale réelle de l'air d'admission pour déterminer un temps de cycle de régénération T(séch) est effectuée selon la formule :

$$T(séch) = T(séch)_{cycle\ max} \times [\text{pression partielle de saturation à la température maximale réelle de l'air d'admission}] / [\text{pression partielle de saturation à la température maximale de l'air d'admission}].$$

**11.** Procédé selon la revendication 8, comprenant en outre l'étape d'estimation du débit d'air volumétrique à travers le dessiccateur d'air (12).

COMPRESSOR    AFTER-COOLER    MR 1    BACK FLOW CHECK VALVE    AIR DRYER    MR 2    BRAKE SYSTEM

FIG. 1

FIG. 2

WATER VAPOR PARTIAL PRESSURE VERSUS T AMBIENT

FIG. 3

EP 3 185 986 B1

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 0375220 A1